# EUROPEAN PATENT APPLICATION

(11) **EP 2 677 498 A2**
(43) Date of publication of application: **25.12.2013**
(21) Application number: 13171441.2
(22) Date of filing: 11.06.2013
(51) Int. Cl.: G06T 7/00

(54) **Image processor, image processing method, and program**

(30) Priority: 22.06.2012 JP 2012140387
(71) Applicant: Sony Corporation, Tokyo 108-0075 (JP)
(72) Inventor: Tsutsumi, Tomonori, TOKYO, 108-0075 (JP); Aoyama, Koji, TOKYO, 108-0075 (JP)
(74) Representative: Körber, Martin Hans

(57) **Abstract**

Disclosed herein is an image processor, including: a detecting portion detecting a composition of an input image; a first generating portion generating first information in accordance with an intensity of image processing based on the composition detected by the detecting portion is controlled; a second generating portion detecting a flat portion in which a change in pixel values corresponding to the input image is small, and generating second information in accordance with which an intensity of image processing for the flat portion is controlled; a third generating portion detecting a foreground portion of the input image, and generating third information in accordance with which an intensity of image processing for the foreground portion is controlled; and an image processing portion executing image processing in accordance with an intensity based on the first information, the second information, and the third information.

## Description

### BACKGROUND

The present disclosure relates to an image processor, an image processing method, and a program. More particularly, the present disclosure relates to an image processor which controls an intensity at which image processing is executed, an image processing method used in the same, and a program used in the same.

There is known an apparatus which executes super-resolution processing for increasing an amount of information on an input image which is displayed at a low resolution, thereby converting the resulting input image into a high-definition image which is displayed at a high resolution. In addition, there is also known an apparatus which executes enhancing processing for subjecting an input image supplied thereto to interpolation processing for further increasing a resolution, and filter processing for emphasizing an edge, thereby converting the resulting input image into an enhanced image which is to be displayed at a higher resolution.

A technique is proposed in which when such super-resolution processing or the enhancing processing is executed, for the purpose of improving an S/N (signal/noise) ratio, and a depth feel and a stereoscopic effect, flatness detection is carried out in order to suppress a noise in a flat portion, thereby controlling a super-resolution and enhancement strength of the flat portion. In addition, Japanese Patent Laid-Open Nos. 2010-72982 and 2009-251839 propose a technique as well with which a super-resolution and enhancement strength are controlled in accordance with depth information calculated based on depth detection.

### SUMMARY

Just by the flatness detection, it is difficult to carry out the suppression in the case where there is a nose which is too much to remove away in the processing for the noise reduction, or there is a noise having a strong amplitude. When such a noise is tried to be removed away (suppressed), up to a texture and an edge which are not desired to be suppressed are suppressed, and as a result, it is difficult to execute the suitable noise suppressing processing.

When the depth detection/suppression processing or the like is executed in accordance with the frequency information within the picture, such processing comes to be local processing. As a result, it may be difficult to take in composition information of the picture at large, and thus there is the possibility that the depth feel and the stereoscopic effect are impaired.

Thus, it has been desired that there are executed the image processing for the suitable noise resolution, and the image processing for which the depth feel and the stereoscopic effect are not impaired.

The present disclosure has been made in order to solve the problem described above, and it is therefore desirable to provide an image processing which is capable of executing suitable image processing, an image processing method used in the same, and a program used in the same.

In order to attain the desire described above, firstly, according to an embodiment of the present disclosure, there is provided an image processor including: a detecting portion detecting a composition of an input image; a first generating portion generating first information in accordance with an intensity of image processing based on the composition detected by the detecting portion is controlled; a second generating portion detecting a flat portion in which a change in pixel values corresponding to the input image is small, and generating second information in accordance with which an intensity of image processing for the flat portion is controlled; a third generating portion detecting a foreground portion of the input image, and generating third information in accordance with which an intensity of image processing for the foreground portion is controlled; and an image processing portion executing image processing in accordance with an intensity based on the first information, the second information, and the third information.

Secondly, preferably, the image processor may further include: a fourth generating portion synthesizing the first information and the second information, thereby generating fourth information; and a fifth generating portion synthesizing the third information and the fourth information, thereby generating fifth information, in which the image processing portion executes the image processing in accordance with an intensity based on the fifth information.

Thirdly, preferably, the image processor may further include: a fourth generating portion synthesizing the first information and the second information by obtaining minimum values of the first information and the second information, thereby generating fourth information; and a fifth generating portion synthesizing the third information and the fourth information by obtaining maximum values of the third information and the fourth information, thereby generating fifth information, in which the image processing portion executes the image processing in accordance with an intensity based on the fifth information.

Fourthly, preferably, the first generating portion may set a maximum value and a minimum value of the intensity of the image processing controlled in accordance with the first information based on a reliability of the composition detected by the detecting portion, and generating the first information falling within a range of the intensity thus set.

Fifthly, preferably, when the input image is divided into parts based on the composition detected by the detecting portion, the first generating portion may detect a line becoming a boundary of the division and may generate the first information in accordance with which the intensity is steeply changed with the line as the boundary.

Sixthly, preferably, the image processing which the image processing portion executes may be at least one piece of processing of super-resolution processing, enhancing processing, noise reducing processing, S/N ratio improving processing, and depth feel and stereoscopic effect improving processing.

Seventhly, according to the embodiment of the present disclosure, there is provided an image processing method for an image processor executing image processing for an input image, the method including: detecting a composition of an input image; generating first information in accordance with an intensity of image processing based on the composition thus detected is controlled; detecting a flat portion in which a change in pixel values corresponding to the input image is small, and generating second information in accordance with which an intensity of image processing for the flat portion is controlled; detecting a foreground portion of the input image, and generating third information in accordance with an intensity of image processing for the foreground portion is controlled; and executing image processing in accordance with an intensity based on the first information, the second information, and the third information.

Eighthly, according to the embodiment of the present disclosure, there is provided a program in accordance with which a computer controlling an image processor subjecting an input image to image processing is caused to execute processing including: detecting a composition of an input image; generating first information in accordance with an intensity of image processing based on the composition thus detected is controlled; detecting a flat portion in which a change in pixel values corresponding to the input image is small, and generating second information in accordance with which an intensity of image processing for the flat portion is controlled; detecting a foreground portion of the input image, and generating third information in accordance with which an intensity of image processing for the foreground portion is controlled; and executing image processing in accordance with an intensity based on the first information, the second information, and the third information.

In the image processor, the image processing method, and the program according to the embodiment described above of the present disclosure, with the computer for controlling the image processor for subjecting the input image to the image processing, the composition of the input image is detected. Also, the first information in accordance with which the intensity of the image processing based on the composition thus detected is controlled, the second information in accordance with which the intensity of the image processing for the flat portion is controlled, and the third information in accordance with which the intensity of the image processing for the foreground portion is controlled are respectively generated. Also, the predetermined pieces of image processing are executed in accordance at the intensity based on the first information, the second information, and the third information.

As set forth hereinabove, according to the present disclosure, the suitable image processing is enabled to be executed. The image processing includes the super-resolution processing, the enhancing processing, the noise reducing processing, the S/N ratio improving processing, and the depth feel and the stereoscopic effect improving processing. Thus, it becomes possible to suitably execute these pieces of image processing.

### BRIEF DESCRIPTION OF THE DRAWINGS

FIG. 1 is a block diagram showing a configuration of an image processor according to an embodiment of the present disclosure;
FIGS. 2A to 2C are respectively views explaining compositions;
FIGS. 3A to 3C are respectively views explaining composition masks;
FIGS. 4A to 4C are respectively views explaining composition masks;
FIG. 5 is a view explaining composition masks;
FIG. 6 is a view explaining masks;
FIG. 7 is a flow chart explaining mask generating processing in an operation of the image processor shown in FIG. 1;
FIG. 8 is a flow chart explaining composition mask generating processing in an operation of the image processor shown in FIG. 1; and
FIG. 9 is a block diagram explaining a recording media.

### DETAILED DESCRIPTION OF THE PREFERRED EMBODIMENT

Hereinafter, an embodiment of the present disclosure will be described in detail with reference to the accompanying drawings. It is noted that the description will be given below in accordance with the following order.
1. Configuration of Image Processor
2. Composition Masks
3. Flat Mask, Foreground Mask, Background Mask, and Composition Adaptive Mask
4. Operation of Image Processor
5. Recording Media

### 1. Configuration of Image Processor

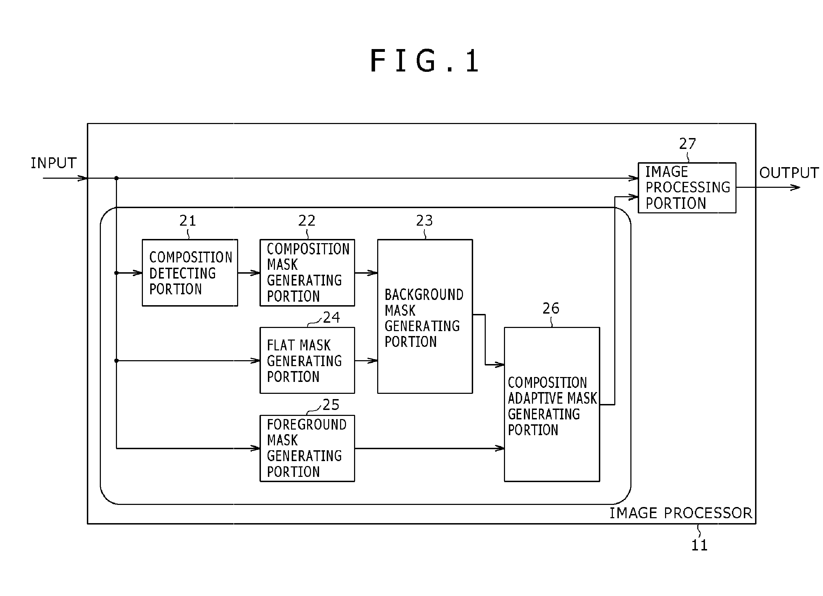

FIG. 1 is a block diagram showing a configuration of an image processor according to an embodiment of the present disclosure. The image processor 11 shown in FIG. 1 is an apparatus which is incorporated in a part of an apparatus, such as a television set or a recorder, for processing a moving image or a still image, or which supplies a signal after completion of processing, as an apparatus different from the above apparatus, to the above apparatus.

The image processor 11 shown in FIG. 1 is composed of a composition detecting portion 21, a composition mask generating portion 22, a background mask generating potion 23, a flat mask generating portion 24, a foreground mask generating portion 25, a composition adaptive mask generating portion 26, and an image processing portion 27.

The image processor 11 is configured in such a way that the image processing portion 27 executes predetermined pieces of processing by using masks which are generated from an input image by the composition detecting portion 21, the composition mask generating portion 22, the background mask generating potion 23, the flat mask generating portion 24, the foreground mask generating portion 25, and the composition adaptive mask generating portion 26.

An input signal which has been inputted to the image processor 11 is supplied to each of the composition detecting portion 21, the flat mask generating portion 24, the foreground mask generating portion 25, and the image processing portion 27. The composition detecting portion 21 detects a composition of an image corresponding to the input signal, and supplies a detection result about the composition to the composition mask generating portion 22. The composition mask generating portion 22 generates a composition mask based on the detection result, about the composition, supplied thereto.

### 2. Composition Masks

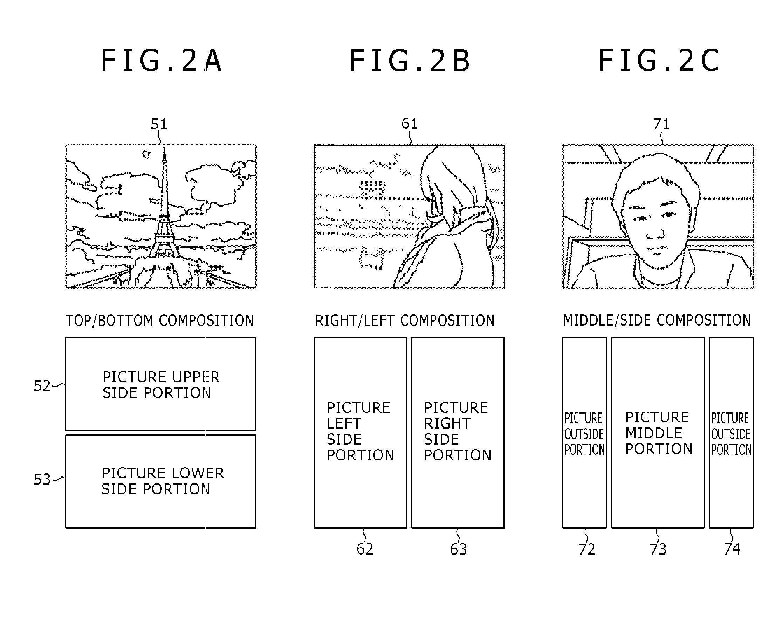

A description will be given below with respect to the compositions detected by the composition detecting portion 21 with reference to FIGS. 2A to 2C. When an image 51 as shown in an upper stage of FIG. 2A is made an object of processing in the composition detecting portion 21, the image 51 is detected as having a top/bottom composition. In making reference to the image shown in the upper stage of FIG. 2A, the image 51 is an image obtained by photographing a picture in which the sky lies on the upper side, and the trees and fountain lie on the lower side. An image such that an upper side of a scenery or the like is a long-distance view, and a lower side thereof is a short-distance view is detected as having the top/bottom composition.

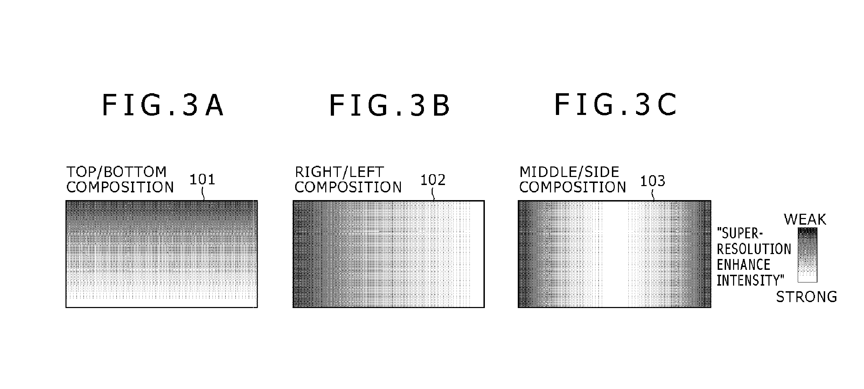

It is noted that an image such that the lower side of a scenery or the like is the long-distance view, and the upper side thereof is the short-distance view is also detected as having the top/bottom composition. The top/bottom composition, as shown on a lower stage of FIG. 2A, is processed as a composition which is adapted to be divided into a picture upper side portion 52 and a picture lower side portion 53. Being processed as the top/bottom composition means that a mask of the top/bottom composition is generated in the composition mask generating portion 22 in the subsequent stage. The mask will be described later with reference to FIGS. 3A to 3C.

When an image 61 as shown in an upper stage of FIG. 2B is made an object of the processing in the composition detecting portion 21, the image 61 is detected as having a right/left composition as shown in a lower stage of FIG. 2B. In making reference to the image 61 shown in the upper stage of FIG. 2B, the image 61 is an image obtained by photographing a picture in which a human being lies on the right-hand side, and a background such as a lake and the like lies on the left-hand side. As described above, the image such that the left-hand side of a scenery or the like is the long-distance view, and the right-hand side thereof is the short-distance view is detected as having a right/left composition.

It is noted that an image such that the left-hand side of a scenery or the like is the short-distance view, and the right-hand side thereof is the long-distance view is also detected as having the right/left composition. The right/left composition, as shown on the lower side of FIG. 2B, is a composition which is adapted to be divided into a picture left-hand side portion 62, and a picture right-hand side portion 63.

When an image 71 as shown in an upper stage of FIG. 2C is made the object of the processing in the composition detecting portion 21, the image 71 is detected as having a middle/side composition as shown in a lower stage of FIG. 2C. In making reference to the image 71 shown in the upper stage of FIG. 2C, the image 71 is an image obtained by photographing a picture in which a human being lies in the vicinity of the center, and backgrounds lie on the left-hand side and the right-hand side, respectively. As has been described, the image such that the vicinity of the center of a scenery or the like is the short-distance view, and each of right-and left-hand sides thereof is the long-distance view is detected as a having middle/side composition.

It is noted that the vicinity of the center of a scenery or the like is the long-distance view, and each of right- and left-hand sides thereof is the short-distance view is also detected as having the middle/side composition. As shown on the lower side of FIG. 2C, the middle/side composition is processed as the composition which is adapted to be divided into a picture outside portion 72, a picture middle portion 73, and a picture outside portion 74.

In such a manner, the composition detecting portion 21 detects the composition of the input image. Although the detection of the composition can be carried out by separating the image into the long-distance view and the short-distance view, the composition may also be detected by using any other suitable method. In addition, although in the description given with reference to FIGS. 2A to 2C, the description is given by exemplifying the three compositions, other composition may also be detected. In this case, the description will be continuously given below on the assumption that the three compositions described above are detected.

FIGS. 3A to 3C are respectively views showing examples of a composition mask generated in the composition mask generating portion 22. A composition mask 101 shown in FIG. 3A is a mask which is generated when the image is detected as having the top/bottom composition shown in FIG. 2A. A composition mask 102 shown in FIG. 3B is a mask which is generated when the image is detected as having the right/left composition shown in FIG. 2B. Also, a composition mask 103 shown in FIG. 3C is a mask which is generated when the image is detected as having the middle/side composition shown in FIG. 2C.

Each of the composition masks shown in FIGS. 3A to 3C, respectively, is a mask for controlling the intensity at which the image processing such as the super-resolution, the enhancement, and the noise removal is executed for the image. When any of the composition masks shown in FIGS. 3A to 3C, respectively, is applied to the image processing such as the super-resolution or the enhancement, the processing is executed in such a way that like a gauge shown on the right-hand side of FIGS. 3A to 3C, the intensity is strong as the color is lighter (closer to a white color), and the intensity is weak as the color is darker (closer to a black color).

In addition, when any of the composition masks shown in FIGS. 3A to 3C, respectively, for example, is applied to the image processing such as the noise removal, although the gauge is not shown in FIGS. 3A to 3C, the processing is executed in such a way that the intensity is weak as the color is lighter (closer to a white color), and the intensity is strong as the color is darker (closer to a black color). For example, for the pixels located so as to correspond to the color which is lighter, the processing for the noise removal is executed by using a weak filter. On the other hand, for the pixels located so as to correspond to the color which is darker, the processing for the noise removal is executed by using a strong filter.

As described above, the composition masks shown in FIGS. 3A to 3C, respectively, are the masks which can be used so as to be common to the different pieces of image processing such as the super-resolution, the enhancement, and the noise removal, and the masks which can control the intensity adapted to the image processing to be applied. As described above, a relationship in processing intensity between the lighter color and the darker color within the composition masks shown in FIGS. 3A to 3C, respectively, is different between the case where the composition masks are applied to the image processing such as the super-resolution and the enhancement, and the case where the composition masks are applied to the noise removing processing. Therefore, in the following, the description will be continuously given by exemplifying the case where the composition masks are applied to the image processing such as the super-resolution and the enhancement.

In addition, the intensity of the image processing such as the super-resolution and the enhancement contains two meanings: the intensity itself in the phase of the image processing such as the super-resolution and the enhancement; and the intensity of the suppression of the super-resolution and the enhancement. However, in this case, the description will be mainly, continuously given on the assumption that the intensity of the image processing such as the super-resolution and the enhancement is the intensity itself in the phase of the image processing such as the super-resolution and the enhancement.

A composition mask 101 used for the top/bottom composition and shown in FIG. 3A is such a mask that the intensity is gradually changed from the lower sides. Also, the composition mask 101 is the mask in which the intensity is changed from strength to weakness. A composition mask 102 used for the right/left composition and shown in FIG. 3B is such a mask that the intensity is gradually changed from the right-hand side. Also, the composition mask 102 is the mask in which the intensity is changed from strength to weakness. Also, a composition mask 103 used for the middle/side composition and shown in FIG. 3C is such a mask that the intensity is gradually changed from the center to each of the left-hand side and the right-hand side. Also, the composition mask 103 is the mask in which the intensity is changed from strength to weakness.

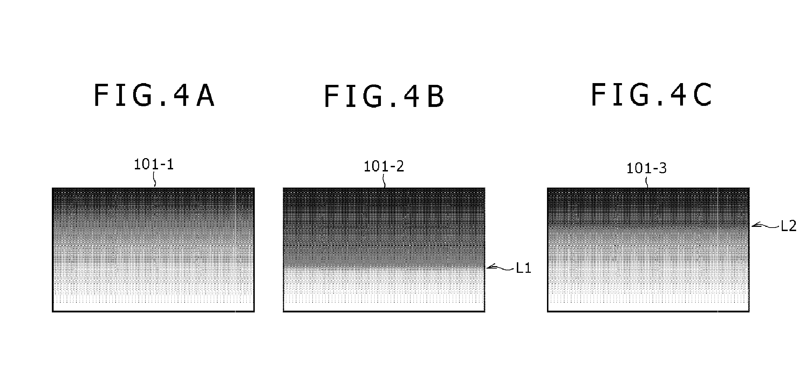

The degree of the change in the intensity of each of the composition masks 101 to 103 is set depending on the input image. This respect will be described below with reference to FIGS. 4A to 4C. Although in the description in and after the description given with reference to FIGS. 4A to 4C, the description will be given by exemplifying the top/bottom composition, the description also applies to each of the right/left composition, and the middle/side composition.

A composition mask 101-1 shown in FIG. 4A is a mask in which the intensity is uniformly changed in such a way that the intensity is successively weakened from the lower side to the upper side in the picture. Although the composition mask 101-1 corresponds to the image having the top/bottom composition, the composition mask 101-1 is applied to such an image that a clear boundary line is absent between the picture upper side portion 52 and the picture lower side portion 53 (refer to FIG. 2A).

A composition mask 101-2 shown in FIG. 4B is a mask in which the intensity is changed in such a way that the intensity is weakened from the lower side to the upper side in the picture. However, the composition mask 101-2 is the mask in which the intensity is steeply changed with a line L1 as a boundary. In addition, a composition mask 101-3 shown in FIG. 4A is a mask in which the intensity is uniformly changed in such a way that the intensity is successively weakened from the lower side to the upper side in the picture. However, the composition mask 101-3 is the mask in which the intensity is steeply changed with a line L2 as a boundary.

It is noted that although in this case, the description is continuously given on the assumption that the intensity is steeply changed with the line as the boundary, the intensity is set in such a way that the intensity is steeply changed within areas which have some degrees of widths before and after that line, respectively, and thus it is not meant that the entirely different intensity is set with the line as the boundary.

Although the composition mask 101-2 and the composition mask 101-3 are the composition masks in which the intensities are steeply changed with the line L1 and the like L2 as the boundaries, respectively, the position of the line L1 and the like L2 are different from each other. The line L1 and the like L2 are lines in the case of the image such that the image made the object of the processing is adapted to be clearly separated into the picture upper side portion 52 and the picture lower side portion 53, and are also lines in the case where the boundary line between the picture upper side portion 52 and the picture lower side portion 53 is detected.

That is to say, the composition mask 101-2 shown in FIG. 4B is the mask generated from the image which is adapted to be separated into the upper side and the lower side with the line in the horizontal direction composed of the line L1. Likewise, the composition mask 101-3 shown in FIG. 4C is the mask generated from the image which is adapted to be separated into the upper side and the lower side with the line in the horizontal direction composed of the line L2.

As described above, in the composition detecting portion 21 (refer to FIG. 1), it is detected whether the image made the object of the processing is detected as the top/bottom composition, the right/left composition or the middle/side composition. Also, during the detection of the image made the object of the processing, for example, in the case where the image made the object of the processing is detected as having the top/bottom composition, the horizontal line is further detected.

In addition, in the case where the image made the object of the processing is detected as having the right/left composition, there is detected the line in the vertical direction with which the picture left-hand side portion 62 and the picture right-hand side portion 63 are separated from each other. Also, in the case where the image made the object of the processing is detected as having the middle/side composition, there are detected two lines: a line in the vertical direction with which the picture outside portion 72 and the picture middle portion 73 are separated from each other; and a line in the vertical direction with which the picture middle portion 73 and the picture outside portion 74 are separated from each other. In such a manner, the lines suitable for the respective compositions are detected.

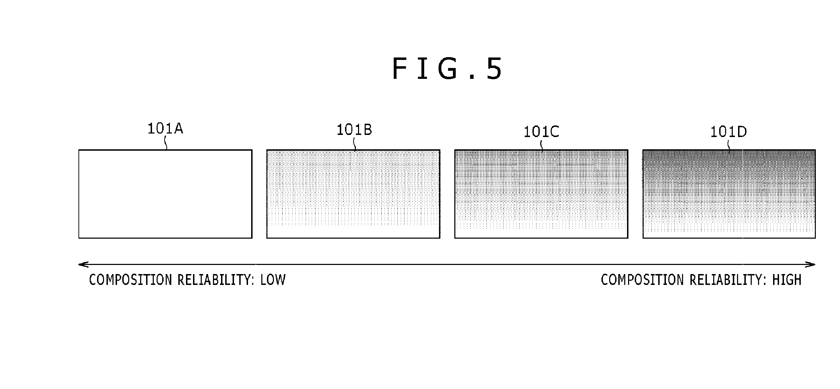

However, the degree of the change in the intensity within each of the masks is changed depending on the reliabilities. A description will be given below with respect to composition masks in each of which the degree of the change in the intensity is changed depending on the reliabilities with reference to FIG. 5. The reliability includes the reliability with respect to that the composition detected is proper, and the reliability with respect to that the line estimated is proper.

When the reliability is high, like a composition mask 101D shown on the right-hand side of FIG. 5, the intensity is changed based on the composition and the line which have been detected. In this case, the composition mask 101D is made a composition mask such that a difference between a maximum intensity and a minimum intensity becomes large. That is to say, if the reliability is high, then there is applied a composition mask such that an influence by the composition mask is strongly reflected in the phase of the image processing in the subsequent stage.

On the other hand, when the reliability is low, there is no change in the intensity based on the composition and the line which have been detected. In this case, the mask 101A is made a composition mask in which the difference between the maximum intensity and the minimum intensity is set to zero with respect to the intensity. That is to say, if the reliability is low, then there is applied a composition mask such that the influence by the composition mask is not reflected in the phase of the image processing in the subsequent stage.

It is noted that when no composition is detected for the image, since the reliability is processed as being low, the composition mask 101A shown in FIG. 5 is used as the composition mask. Here, the case where no composition is detected for the image represents the case where none of the three composition masks shown in FIGS. 3A to 3C, respectively, that is, the top/bottom composition, the right/left composition, and the middle/side composition is detected for the image. When other compositions are also each made the object of the detection, if any of the compositions, including these compositions has been detected, then, it is decided that the composition has been detected for the image. On the other hand, if none of the compositions, including these compositions has been detected, then it is decided that no composition has been detected for the image.

A composition mask 101B and a composition mask 101C which are shown in the center of FIG. 5 are masks in which the intensities (each being the difference between the intensities) corresponding to the reliabilities are set, respectively. For example, when the reliability is 100, the composition mask 101D is used and as a result, there is used the mask in which the difference between the maximum intensity and the minimum intensity is set to 100. On the other hand, when the reliability is 0, the composition mask 101A is used and as a result, there is used the mask in which the difference between the maximum intensity and the minimum intensity is set to 0.

In addition, for example, when the reliability is 40, the composition mask 101B is used and as a result, there is used the mask in which the different between the maximum intensity and the minimum intensity is set to 40. Also, when the reliability is 80, the composition mask 101C is used and as a result, there is used the mask in which the different between the maximum intensity and the minimum intensity is set to 80.

In such a manner, the maximum value and the minimum value of the intensity within the composition mask may be set depending on the reliabilities. That is to say, in this case, the maximum intensity is set constant, and the minimum value is set in such a way that the minimum intensity comes close to the maximum intensity as the composition reliability becomes lower. In such a case, for example, a procedure may also be adopted such that the composition mask is generated in which the minimum value of the intensity is set, and the intensity is changed within the range of the intensity between the minimum value thus set, and the maximum value set as the constant value. It is noted that such setting of the intensity based on the reliability is merely an example, and thus the intensity may also be set based on the reliability in relationship to any other suitable factor.

The reliability, for example, is obtained from a difference between flatness degrees, bands, amplitudes, or two pieces of color information which are obtained through two-division. The composition reliability is set high for the image in which the composition estimation can be clearly carried out because the difference is large. On the other hand, the composition reliability is set low for the image in which the composition estimation is not reliable because the difference is small. The composition reliability can be set with a numerical value of 0 to 100%.

As a special case, when all it takes is that although the difference is large, the reliability is not made high, the composition reliability is made low. For example, when it is decided that although the difference is large in the top/bottom comparison, the image is an image in which there are many textures and edges in the upper side portion as well, the composition reliability is set low.

In addition, as a special case, when all it takes is that although the difference is small, the reliability is made high, the composition reliability is made high. For example, when it is decided that although the difference is small in the top/bottom composition, the composition is a scenery composition such that there is the blue sky in the upper side portion, the composition reliability is set high.

It is noted that how to set the composition reliability is merely an example, and thus the composition reliability may also be set by utilizing any other suitable setting method.

As described above, the composition is detected in the composition detecting portion 21, and there is generated the composition mask corresponding to the composition detected by the composition mask generating portion 22.

### 3. Flat Mask, Foreground Mask, Background Mask, and Composition Adaptive Mask

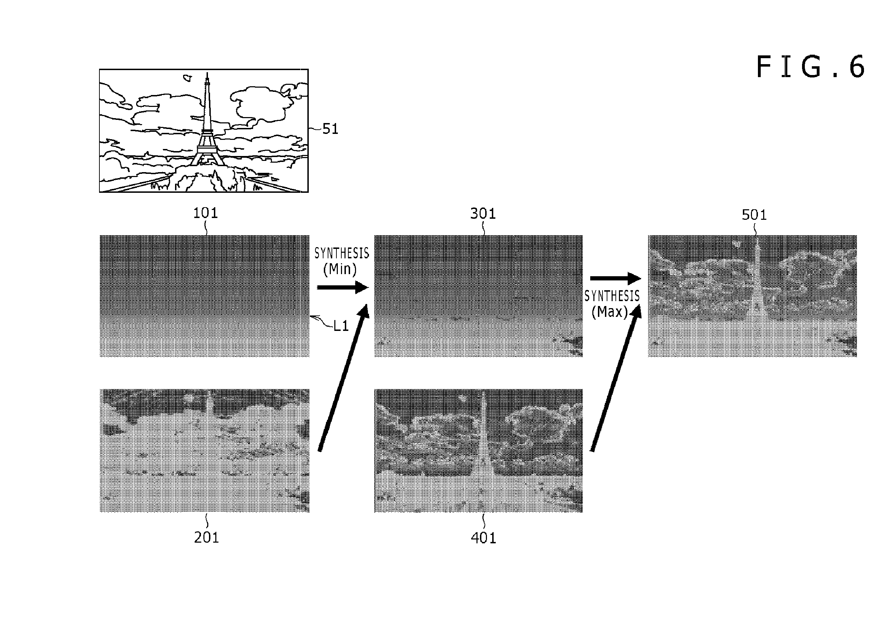

Next, a description will now be given with respect to a flat mask generated in the flat mask generating portion 24 (refer to FIG. 1), a foreground mask generated in the foreground mask generating portion 25, a background mask generated in the background mask generating portion 23, and a composition adaptive mask generated in the composition adaptive mask generating portion 26 with reference to FIG. 6.

As shown in FIG. 6, the image 51 is supplied to each of the composition detecting portion 21, the flat mask generating portion 24, and the foreground mask generating portion 25, firstly, the composition is detected in the manner as described above by both of the composition detecting portion 21 and the composition mask generating portion 22, thereby generating the composition mask 101. In this case, the description is continuously given on the assumption that the top/bottom composition is detected, and the composition mask 101 is generated in which the intensity is steeply changed in the line L1.

The flat mask generating portion 24 generates the flat mask 201 for suppressing the noise in a flat portion in the phase of the image processing, for example, when the noise reducing processing is executed. The flat portion is an empty which, for example, is present in the upper portion in the flat mask 201 in FIG. 6, and is also a portion in which the change in the luminance or the like is small. Such a portion is a portion in which the pixel values are approximately uniform, and the number of edges is small within the image.

The foreground mask portion 25 generates the foreground mask 401 for emphasizing an edge and a texture. An edge portion, for example, a boundary portion between a building and the sky in the foreground mask 401 shown in FIG. 6. Although the foreground mask 401 is the mask for emphasizing the edge and the texture, the foreground mask 401 is the mask which does not emphasize a mosquito noise at all.

The flat mask generating portion 24 and the foreground mask portion 25 generate either the flat mask 201 or the foreground mask 401 based on the flatness degree, the band, the amplitude, the color information, and the like.

The background generating portion 23 synthesizes the composition mask 101 generated in the composition mask generating portion 22, and the flat mask 201 generated in the flat mask generating portion 24, thereby generating the background mask 301. The synthesis, for example, is carried out by obtaining a minimum values (Min) of the composition mask 101 and the flat mask 201. It is noted that although the description is continuously given on the assumption that the synthesis in this case is realized by obtaining the minimum values (Min), and superimposing the minimum values (Min) on each other in terms of a layer, the synthesis may also be realized based either on a weighted average or on a weighted addition of the two masks.

The background mask 301 thus generated is such a mask as not to emphasize a blurred portion, but as to emphasize the near side, thereby enhancing the depth feel and the stereoscopic effect.

The composition adaptive mask generating portion 26 synthesizes the background mask 301 generated in the background mask generating portion 23, and the foreground mask 401 generated in the foreground mask generating portion 25, thereby generating a composition adaptive mask 501. The synthesis, for example, is carried out by obtaining maximum values (Max) of the background mask 301 and the foreground mask 401. It is noted that although the description is continuously given on the assumption that the synthesis in this case is realized by obtaining the maximum values (Max), and superimposing the maximum values (Max) on each other in terms of a layer, the synthesis may also be realized based either on the weighted average or on the weighted addition of the two masks.

The composition adaptive mask 501 generated in the composition adaptive mask generating portion 26 is supplied to the image processing portion 27.

Note that, in this case, the description has been given on the assumption that the composition mask 101 and the flat mask 201 are synthesized to generate the background mask 301, and the background mask 301 thus generated and the foreground mask 401 are further synthesized to generate the composition adaptive mask 501. However, a combination of the masks to be synthesized, the order of the synthesis, how to carry out the synthesis, and the like are by no means limited to these combination, the order, and how to carry out the synthesis.

For example, a procedure may also be adopted in which the maximum values (Max) of the composition mask 101 and the foreground mask 401 are obtained, thereby carrying out the synthesis, and the final mask corresponding to the composition adaptive mask 501 is generated by executing processing for subtracting the flat mask 201 from the synthetic mask. In addition, for example, a procedure may also be adopted in which the minimum values (Min) of the flat mask 201 and the foreground mask 401 are obtained, thereby carrying out the synthesis, and the final mask corresponding to the composition adaptive mask 501 is generated by obtaining an average between the composition mask 101 and the synthetic mask.

In the manner as described above, plural sheets of masks are synthesized to generate one sheet of mask, that is, the composition adaptive mask 501 in this case, whereby the mask having the good advantages of the plural sheets of masks. Also, it becomes possible to use such a mask in the image processing.

In the image processing executed in the image processing portion 27, the strength-control for each pixel for the super-resolution processing, and the enhancing processing is carried out by using the composition adaptive mask 501 to which the composition information is adopted. Also, there is executed the processing aiming at improving the S/N ratio, and the depth feel and the stereoscopic effect.

In addition, the object of the control can also be set to the processing which will be described below.

The image processing which is effective in the S/N ratio improvement, and the depth feel and the stereoscopic effect improvement can be executed by changing the intensity, similarly to the case of the intensity control for each pixel for the super-resolution and the enhancement, for:
(i) processing for improving an S/N ratio based on the intensity setting for noise reduction (NR),
(ii) processing for improving the depth feel and the stereoscopic effect based on contrast processing, and
(iii) processing for improving the depth feel and the stereoscopic effect based on color correction (color difference, saturation).

The information in accordance with which when such image processing is executed, for which of the pixels at how large intensity the processing should be executed is controlled is the composition adaptive mask 501. Therefore, the composition mask 101, the flat mask 201, the foreground mask 301, the background mask 401, and the composition adaptive mask 501 are respectively the five pieces of information in accordance with the intensities for the image processing are controlled.

Therefore, even if the image processing is executed by using one sheet of mask, since the mask itself is the information in accordance with which the intensity for the image processing is controlled, the image processing can be executed at the intensity corresponding to the mask concerned. The mask in the image processor 11 of the embodiment is the information in accordance with which the intensity for the image processing is controlled in such a manner. Thus, even when a form is not the form of the mask, the technique of the present disclosure can be applied thereto as long as the form other than the mask corresponds to the information in accordance with which the intensity for the image processing is controlled.

### 4. Operation of Image Processor

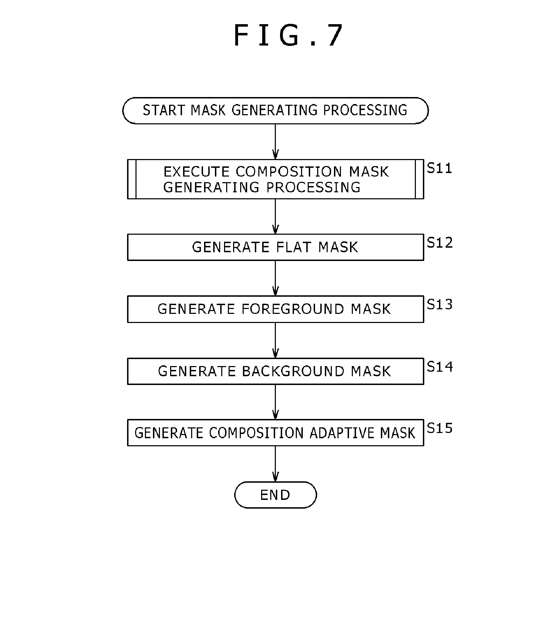

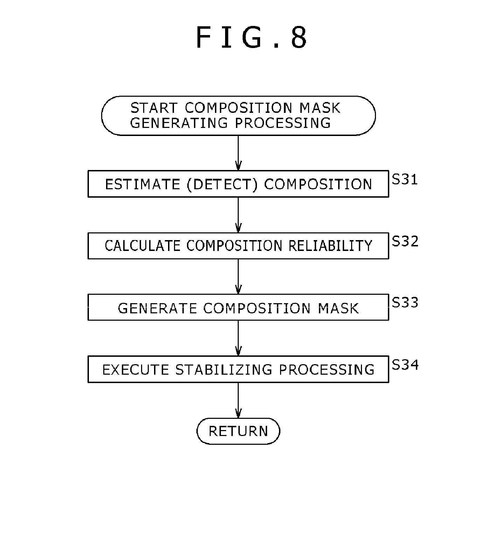

An operation of the image processor 11 shown in FIG. 1 will now be described in detail with reference to flow charts of FIGS. 7 and 8. Firstly, mask generating processing executed in the image processor 11 will be described with reference to the flow chart shown in FIG. 7.

In processing in step S 11, composition mask generating processing is executed. The composition mask generating processing is executed by both of the composition detecting portion 21 and the composition mask generating portion 22 in the manner as will be described with reference to the flow chart of FIG. 8. Firstly, the description of the flow chart shown in FIG. 7 is continuously given below.

In processing in step S 12, the flat mask 201 is generated. The flat mask 201 is generated by the flat mask generating portion 24. As has been described with reference to FIG. 6, the flat mask generating portion 24 generates the flat mask based on the flatness degree, the band, the amplitude, the color information, and the like.

In processing in step S 13, the foreground mask 401 is generated. The foreground mask 401 is generated by the foreground mask generating portion 25. As has been described with reference to FIG. 6, the foreground mask generating portion 25 generates the foreground mask 401 based on the flatness degree, the band, the amplitude, the color information, and the like.

The processing in step S14, the background mask 301 is generated. The background mask 301 is generated by the background mask generating portion 23. As has been described with reference to FIG. 6, the background mask generating portion 23 obtains the minimum values (Min) of the composition mask 101 and the flat mask 201 to synthesize the composition mask 101 and the flat mask 201, thereby generating the background mask 301.

In processing in step S15, the composition adaptive mask 501 is generated. The composition adaptive mask 501 is generated by the composition adaptive mask generating portion 26. As has been described with reference to FIG. 6, the composition adaptive mask generating portion 26 obtains the maximum values (Max) of the background mask 301 and the foreground mask 401 to synthesize the background mask 301 and the foreground mask 401, thereby generating the composition adaptive mask 501.

The composition adaptive mask 501 generated in such a manner is supplied to the image processing portion 27. Also, the image processing corresponding to the level set by the composition adaptive mask 501 is executed for the data corresponding to the input image, and the resulting data is then outputted to a processing portion (not shown) in the subsequent stage.

The composition mask generating processing executed in the processing in step S11 of the flow chart shown in FIG. 7 will now be described with reference to FIG. 8. In processing in step S31, the composition detecting portion 21 estimates (detects) the composition of the image inputted thereto. The picture is divided into two parts, and the rough composition (the top/bottom compression, the right/left composition or the middle/side composition shown in FIG. 2) of the picture is estimated from the flatness degree, the band, the amplitude, and the color information, thereby carrying out the estimation of the composition of the input image. It is noted that when any of the compositions is not applicable, the setting is carried out in such a way that any of the composition masks is not applied in terms of the entire surface composition.

In processing in step S32, the composition reliability is calculated. The calculation for the composition reliability may be carried out in any of the composition detecting portion 21 and the composition mask generating portion 22. The composition reliability of 0 to 100% is obtained from the differences between the flatness degrees, the bands, the amplitudes, and the two pieces of the color information which are obtained through the two-division. For the image in which each of the differences is large and thus the composition estimation can be clearly carried out, the composition reliability is set high. On the other hand, for the image in which each of the differences is small and thus the composition estimation is not reliable, the composition reliability is set low.

In processing in step S33, the composition mask 101 is generated by the composition mask generating portion 22. As previously described with reference to FIGS. 2A to 2C to FIG. 5, the composition mask 101, for example, is generated as such a mask as to uniformly suppress the intensities of the super-resolution and the enhancement. In addition, the strength of the suppression is changed depending on the result of the calculation of the composition reliability obtained in the processing in step S32. For example, when the composition reliability is set low, the composition mask 101 with which no suppressing processing is executed or only the weak suppressing processing is executed is generated.

In addition, there may also be generated the composition mask 101 such that as previously described with reference to FIGS. 4A to 4C, the horizontal line is detected based on the flatness degree, the band, and the amplitude, and the suppression is abruptly heightened from the portion containing therein that horizontal line, whereby it is possible to further improve the S/N ratio, and the depth feel and the stereoscopic effect. With regard to this processing as well, similarly to the case of the composition reliability, the reliability with which the strength of the suppression is made steep in the composition mask may be obtained, and thus the intensity with which the strength of the suppression is made steep in the composition mask may be changed.

Such processing is executed as may be necessary, thereby generating the composition mask 101.

In processing in step S4, stabilizing processing is executed by the composition mask generating portion 22. It is possible that the composition mask 101 is abruptly changed due the variation of the moving image response or the composition detection result. When the composition mask 101 is abruptly changed, for the purpose of preventing the composition mask 101 from being abruptly changed along with that change, such time constant control as to cause the change to be slowly carried out up to the composition mask 101 of the target by executing Infinite Impulse Response (IIR) processing, thereby realizing the stabilization.

By executing such processing, the composition mask 101 is generated and is then supplied to the background mask generating portion 23. After that, the operation proceeds to the processing in step S 12. Also, by executing the predetermined pieces of processing as described above, the composition adaptive mask 501 is generated and is then supplied to the image processing portion 27.

In the manner as described above, with the technique of the present disclosure, the mask is used which is obtained by obtaining the minimum values of the composition mask 101 and the flat mask 201 which have been generated based on the composition detection. Therefore, it is possible to suppress (remove away) even the noise which cannot be removed away by the noise reduction for the partial picture, on the picture upper side, such as the scenery, for example, even the noise or the like which cannot be removed away by Random Noise Reduction for the compression strain, or MPEG Noise Reduction, or even the noise which cannot be suppressed away by the flat mask.

For example, there are many flat portions in the partial picture, on the picture upper side, such as the scenery like the image 51 shown in FIG. 6, and the random noise, the mosquito noise, the composition strain or the like in such portions is very conspicuous and thus is visually recognized by a viewer. However, the control in accordance with which the noise removal for such flat portions is strongly carried out becomes possible by using the flat mask 201. In addition thereto, the control in accordance with which the processing for such flat portions is intensively executed becomes possible by using the composition mask 101. As a result, the noise can be removed away, thereby improving the S/N ratio.

In addition, with the technique of the present disclosure, the mask is used which is obtained by obtaining the minimum values of the composition mask 101 and the flat mask 201 which have been generated based on the composition detection. Therefore, it is possible to prevent the emphasis of the portion which is out-of-focus (the blurred portion) in the composition such that the depth of field is shallow.

For example, when the super-resolution and the enhancement are strongly applied to the portion which is out-of-focus (the blurred portion) like the image 61 shown in FIG. 2B, both of the depth feel and the stereoscopic effect are impaired, and also the gradation worsening is caused. As a result, the grade becomes worse. However, the control can be carried out in such a way that the super-resolution and the enhancement are prevented from being strongly applied to the portion which is out-of- focus (the blurred portion) by using the composition mask 102 (refer to FIG. 2B).

For example, when the image 61 shown in FIG. 2B is made the object of the processing, the image 61 is decided to have the right/left composition. Thus, the composition mask 102 is generated in which the intensity is set weak in such a way that the super-resolution and the enhancement are prevented from being strongly applied to the picture left side portion 62 corresponding to the background portion, which is out-of-focus, of the image 61. Therefore, the super-resolution and the enhancement are carried out by using such a composition mask 102, whereby it is possible to execute the image processing such that the depth feel and the stereoscopic effect for the portion which is out-of-focus are prevented from being impaired.

In addition, the mask is used which is obtained by adding the foreground mask 401 to the background mask 301. Therefore, even when the composition mask 101 is the mask such that the suppression is uniformly heightened, it is possible to prevent the situation in which it may be impossible to emphasize the edge and texture of the foreground. In other words, the edge and the texture which are to be emphasized are emphasized, whereby it is possible to prevent the situation in which the image becomes the image the whole of which gives a blurred impression to the viewer by executing the image processing.

For example, the edge and the texture are both present in the portion such as the building and the like of the scenery of the image 51 shown in FIG. 2A. In this case, however, using the foreground mask 401, for each pixel, for emphasizing only the edge and the texture results in that none of the mosquito noise and the ringing is emphasized, the processing boundary is not viewed, and thus it is possible to realize the same effects as those in the mask generated in the object units.

In addition, with the technique of the present disclosure, it is possible to suppress the noise, and the portion which is out-of-focus both of which are conspicuous in the flat portion on the upper side of the picture of the scenery or the like. With the existing image quality regulation, the noise emphasis and the gradation worsening in that portion are conspicuous. Therefore, it is possible to either only weaken entirely the intensities of the super-resolution and the enhancement or only take measures to make the noise inconspicuous by blurring the entire scareen. According to the technique of the present disclosure, however, since the intensities of the super-resolution and the enhancement can be partially, optimally controlled in consideration of the composition, the effect of the super-resolution and the enhancement can be further heightened for use.

As described above, with the technique of the present disclosure, the composition mask 101 is the rough composition mask which grasps the features of the entire picture in such a way that, for example, when the upper side of the scenery or the like has the top/bottom composition like the long-distance view, the suppression is uniformly heightened as the area of the picture is located on the upper side. Since it is only necessary to make such a composition mask 101, it is possible to obtain the robust effects.

For example, for the detection of the composition, when the fine composition mask which is controlled in accordance with the frequency information for each area is tried to be made, it may be impossible to take in the composition information on the entire picture, or it is caused that the processing boundary is seen. Therefore, the robust property is lowered. However, as described above, according to the technique of the present disclosure, it is possible to obtain the robust effects.

### 5. Recording Media

The series of processing described above can be executed either by hardware or by software. When the series of processing is executed by the software, a program composing the software is installed in a computer. Here, the computer, for example, includes a computer incorporated in dedicated hardware, and a general-purpose personal computer which can execute various kinds of functions by installing therein various kinds of programs.

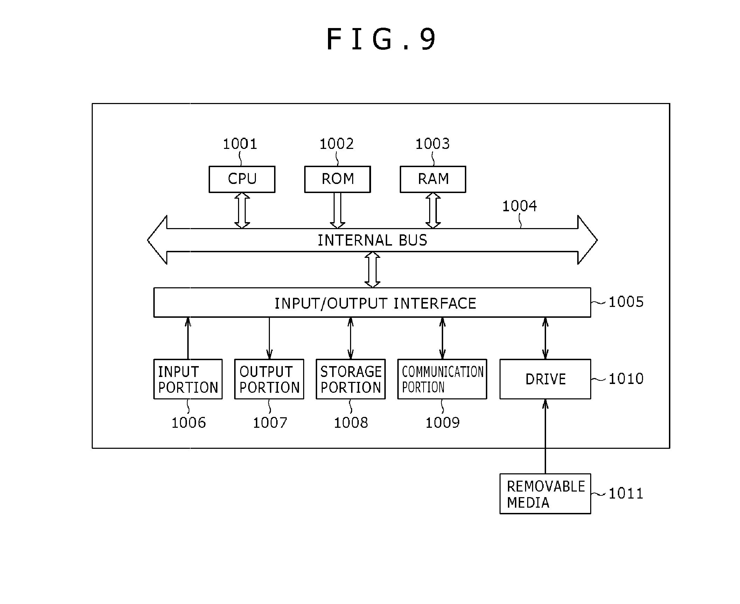

FIG. 9 is a block diagram showing an example a configuration of hardware of a computer for executing the series of processing described above in accordance with a program. In the computer, a Central Processing Unit (CPU) 1001, a Read Only Memory (ROM) 1002, and a Random Access Memory (RAM) 1003 are connected to one another through a bus 1004. An input/output interface 1005 is further connected to the bus 1004. An input portion 1006, an output portion 1007, a storage portion 1008, a communication portion 1009, and a drive 1010 are connected to the input/output interface 1005.

The input portion 1006 is composed of a keyboard, a mouse, a microphone, or the like. The output portion 1007 is composed of a display device, a speaker, or the like. The storage portion 1008 is composed of a hard disk, a non-volatile memory, or the like. The communication portion 1009 is composed of a network interface or the like. The drive 1010 drives a removable media 1011 such as a magnetic disk, an optical disk, a magneto optical disk, or a semiconductor memory.

With the computer configured in the manner as described above, for example, the CPU 1001 loads the program stored in the storage portion 1008 into the RAM 1003 through the input/output interface 1005 and the bus 1004 in order to execute the program, thereby executing the series of processing described above.

The program which the computer (the CPU 1001) executes, for example, can be recorded in a removable media 1011 as a package media or the like to be provided. In addition, the program can be provided through a wired or wireless transmission media such as a Local Area Network (LAN), the Internet, or the digital satellite broadcasting.

In the computer, the program can be installed in the storage portion 1008 through the input/output interface 1005 by mounting the removable media 1011 to the drive 1010. In addition, the program can be received at the communication portion 1009 through the wired or wireless transmission media to be installed in the storage portion 1008. In addition thereto, the program can be previously installed either in the ROM 1002 or in the storage portion 1008.

It is noted that the program which the computer executes either may be a program in accordance with which predetermined pieces of processing are executed in a time series manner along the order described in this specification, or may be a program in accordance with which the predetermined pieces of processing are executed in parallel or at a necessary timing such as when a call is made.

In this specification, the system means the entire apparatus composed of plural devices or units.

It is noted that the embodiments of the present disclosure are by no means limited to the embodiments described above, and various kinds of changes can be made without departing from the subject matter of the present disclosure.

It is noted that the technique of the present disclosure can also adopt the following constitutions.
(1) An image processor including:
   a detecting portion detecting a composition of an input image;
   a first generating portion generating first information in accordance with an intensity of image processing based on the composition detected by the detecting portion is controlled;
   a second generating portion detecting a flat portion in which a change in pixel values corresponding to the input image is small, and generating second information in accordance with which an intensity of image processing for the flat portion is controlled;
   a third generating portion detecting a foreground portion of the input image, and generating third information in accordance with which an intensity of image processing for the foreground portion is controlled; and
   an image processing portion executing image processing in accordance with an intensity based on the first information, the second information, and the third information.
(2) The image processor described in the paragraph (1), further including:
   a fourth generating portion synthesizing the first information and the second information, thereby generating fourth information; and
   a fifth generating portion synthesizing the third information and the fourth information, thereby generating fifth information, in which the image processing portion executes the image processing in accordance with an intensity based on the fifth information.
(3) The image processor described in the paragraph (1), further including:
   a fourth generating portion synthesizing the first information and the second information by obtaining minimum values of the first information and the second information, thereby generating fourth information; and
   a fifth generating portion synthesizing the third information and the fourth information by obtaining maximum values of the third information and the fourth information, thereby generating fifth information, in which the image processing portion executes the image processing in accordance with an intensity based on the fifth information.
(4) The image processor described in any one of the paragraphs (1) to (3), in which the first generating portion sets a maximum value and a minimum value of the intensity of the image processing controlled in accordance with the first information based on a reliability of the composition detected by the detecting portion, and generating the first information falling within a range of the intensity thus set.
(5) The image processor described in any one of the paragraphs (1) to (4), in which when the input image is divided into parts based on the composition detected by the detecting portion, the first generating portion detects a line becoming a boundary of the division and generates the first information in accordance with which the intensity is steeply changed with the line as the boundary.
(6) The image processor described in any one of the paragraphs (1) to (5), in which the image processing which the image processing portion executes is at least one piece of processing of super-resolution processing, enhancing processing, noise reducing processing, S/N ratio improving processing, and depth feel and stereoscopic effect improving processing.
(7) An image processing method for an image processor executing image processing for an input image, the method including:
   detecting a composition of an input image;
   generating first information in accordance with which an intensity of image processing based on the composition thus detected is controlled;
   detecting a flat portion in which a change in pixel values corresponding to the input image is small, and generating second information in accordance with which an intensity of image processing for the flat portion is controlled;
   detecting a foreground portion of the input image, and generating third information in accordance with an intensity of image processing for the foreground portion is controlled; and
   executing image processing in accordance with an intensity based on the first information, the second information, and the third information.
(8) A program in accordance with which a computer controlling an image processor subjecting an input image to image processing is caused to execute processing, including:
   detecting a composition of an input image;
   generating first information in accordance with an intensity of image processing based on the composition thus detected is controlled;
   detecting a flat portion in which a change in pixel values corresponding to the input image is small, and generating second information in accordance with which an intensity of image processing for the flat portion is controlled;
   detecting a foreground portion of the input image, and generating the third information in accordance with which an intensity of image processing for the foreground portion is controlled; and
   executing image processing in accordance with an intensity based on the first information, the second information, and the third information.

The present disclosure contains subject matter related to that disclosed in Japanese Priority Patent Application JP 2012-140387 filed in the Japan Patent Office on June 22, 2012, the entire content of which is hereby incorporated by reference.

## Claims

1. An image processor, comprising:
a detecting portion detecting a composition of an input image;
a first generating portion generating first information in accordance with an intensity of image processing based on the composition detected by said detecting portion is controlled;
a second generating portion detecting a flat portion in which a change in pixel values corresponding to the input image is small, and generating second information in accordance with which an intensity of image processing for said flat portion is controlled;
a third generating portion detecting a foreground portion of the input image, and generating third information in accordance with which an intensity of image processing for said foreground portion is controlled; and
an image processing portion executing image processing in accordance with an intensity based on the first information, the second information, and the third information.

2. The image processor according to claim 1, further comprising:
a fourth generating portion synthesizing the first information and the second information, thereby generating fourth information; and
a fifth generating portion synthesizing the third information and the fourth information, thereby generating fifth information,
wherein said image processing portion executes the image processing in accordance with an intensity based on the fifth information.

3. The image processor according to claim 1, further comprising:
a fourth generating portion synthesizing the first information and the second information by obtaining maximum values of the first information and the second information, thereby generating fourth information; and
a fifth generating portion synthesizing the third information and the fourth information by obtaining minimum values of the third information and the fourth information, thereby generating fifth information,
wherein said image processing portion executes the image processing in accordance with an intensity based on the fifth information.

4. The image processor according to claim 1, 2 or 3, wherein said first generating portion sets a maximum value and a minimum value of the intensity of the image processing controlled in accordance with the first information based on a reliability of the composition detected by said detecting portion, and generating the first information falling within a range of the intensity thus set.

5. The image processor according to one of claims 1 to 4, wherein when the input image is divided into parts based on the composition detected by said detecting portion, said first generating portion detects a line becoming a boundary of the division and generates the first information in accordance with which the intensity is steeply changed with the line as the boundary.

6. The image processor according to one of claims 1 to 5, wherein the image processing which said image processing portion executes is at least one piece of processing of super-resolution processing, enhancing processing, noise reducing processing, signal/noise ratio improving processing, and depth feel and stereoscopic effect improving processing.

7. An image processing method for an image processor executing image processing for an input image, said method comprising:
detecting a composition of an input image;
generating first information in accordance with which an intensity of image processing based on the composition thus detected is controlled;
detecting a flat portion in which a change in pixel values corresponding to the input image is small, and generating second information in accordance with which an intensity of image processing for said flat portion is controlled;
detecting a foreground portion of the input image, and generating third information in accordance with an intensity of image processing for said foreground portion is controlled; and
executing image processing in accordance with an intensity based on the first information, the second information, and the third information.

8. A program in accordance with which a computer controlling an image processor subjecting an input image to image processing is caused to execute processing, comprising:
detecting a composition of an input image;
generating first information in accordance with an intensity of image processing based on the composition thus detected is controlled;
detecting a flat portion in which a change in pixel values corresponding to the input image is small, and generating second information in accordance with which an intensity of image processing for said flat portion is controlled;
detecting a foreground portion of the input image, and generating the third information in accordance with which an intensity of image processing for said foreground portion is controlled; and
executing image processing in accordance with an intensity based on the first information, the second information, and the third information.
